**Europäisches Patentamt**

**European Patent Office**

**Office européen des brevets**

(19)

(11) **EP 1 212 664 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(21) Anmeldenummer: **00967519.0**

(22) Anmeldetag: **12.08.2000**

(51) Int Cl.⁷: **G05B 19/4103**

(86) Internationale Anmeldenummer:
**PCT/DE2000/002731**

(87) Internationale Veröffentlichungsnummer:
**WO 2001/013188 (22.02.2001 Gazette 2001/08)**

(54) **VORRICHTUNG UND VERFAHREN ZUR SOLLWERTE-ERZEUGUNG EINES ANTRIEBS**

DEVICE AND METHOD FOR PRODUCING A DEFINED VALUE FOR THE CONTROL OF A DRIVE

DISPOSITIF ET PROCEDE POUR GENERER UNE VALEUR PRESCRITE SERVANT A COMMANDER UN SYSTEME DE COMMANDE

(84) Benannte Vertragsstaaten:
**AT BE CH CY DE DK ES FI FR GB GR IE IT LI LU MC NL PT SE**

(30) Priorität: **18.08.1999 DE 19939137**

(43) Veröffentlichungstag der Anmeldung:
**12.06.2002 Patentblatt 2002/24**

(73) Patentinhaber: **ROBERT BOSCH GMBH**
**70442 Stuttgart (DE)**

(72) Erfinder:
• **BARG, Juergen**
**D-64720 Michelstadt (DE)**

• **DEISENROTH, Joerg**
**D-36093 Kuenzell-Keulos (DE)**

(74) Vertreter: **Thürer, Andreas**
**Rexroth Indramat GmbH,**
**Bürgermeister-Dr.-Nebel-Strasse 2**
**97816 Lohr am Main (DE)**

(56) Entgegenhaltungen:
**EP-A- 0 490 431       EP-A- 0 706 104**
**EP-A- 0 795 804       EP-A- 0 917 033**
**WO-A-98/57240        DE-A- 4 310 126**

## Beschreibung

Stand der Technik

Die Erfindung geht aus von einer Vorrichtung und einem Verfahren zur Erzeugung eines Sollwerts für die Ansteuerung zumindest eines Antriebs, insbesondere für Werkzeugmaschinen. Bei herkömmlichen Werkzeugmaschinensteuerungen können Bewegungsvorgaben innerhalb eines sogenannten Teileprogramms als Folge von Stützstellen hinterlegt werden. Um bestimmten technischen Bedingungen Rechnung zu tragen, werden dynamische Bedingungen im Teileprogramm in Form von Vorschubwerten hinterlegt. Insbesondere bei einer Bewegungsbahn mit stark schwankenden Vorschubwerten können sich rampenförmige Geschwindigkeitsverläufe einstellen, da die Steuerung den Antrieb in der Regel mit einer Sollwertfolge beaufschlagt, um mit Maximalbeschleunigung den nächsten programmierten Vorschubwert zu erreichen. Die sich hierbei unter Umständen ergebenden diskontinuierlichen Geschwindigkeitsverläufe verlangen der Maschinenmechanik hohe Anforderungen ab. Auf die Bearbeitungsqualität wirken sich diese negativ aus.

Der Erfindung liegt die Aufgabe zugrunde, dem Antrieb einer Werkzeugmaschine geeignete Sollwerte vorzugeben, um einen gleichförmigen Geschwindigkeits- und/oder Beschleunigungsverlauf zu erreichen. Diese Aufgabe wird mit den kennzeichnenden Merkmalen der unabhängigen Ansprüche gelöst.

Vorteile der Erfindung

Die erfindungsgemäße Vorrichtung und das erfindungsgemäße Verfahren zur Erzeugung eines Sollwerts für die Ansteuerung zumindest eines Antriebs, insbesondere für eine Werkzeugmaschine, umfaßt ein Teileprogramm oder eine vergleichbare Einrichtung zur Beschreibung einer Bewegungsbahn eines von dem Antrieb bewegbaren Werkzeugs. Das Teileprogramm enthält zumindest zwei Teileprogrammpositionen mit einer zugehörigen Teileprogrammkenngröße wie beispielsweise der Vorschub. Eine Steuerung ermittelt aus dem Teileprogramm eine Sollwertfolge zur Ansteuerung des Antriebs. Es sind Mittel vorgesehen zur Ermittlung einer Strecke, die zwischen den zumindest zwei Teileprogrammpositionen liegt, und zum Erzeugen der Sollwertfolge in Abhängigkeit von der Strecke und von der Teileprogrammkenngröße.

Die Einbeziehung der zurückzulegenden Strecke zwischen zwei Positionswerten erlaubt eine gleichmäßige und kontinuierliche Vorgabe des Antriebssollwerts. Durch die Ermittlung der noch zu durchlaufenden Strecke fließt der gesamte (zukünftige) Bewegungsbahnablauf in die Sollwertvorgabe mit ein. Dadurch läßt sich eine schnelle und kontinuierliche Bearbeitung von Werkstücken erreichen. Weiche Geschwindigkeits- oder Beschleunigungsübergänge lassen sich selbst bei stark schwankenden Bewegungsabläufen erzielen. Zudem ermöglicht die erfindungsgemäße Vorrichtung eine einfache Programmierung eines Teileprogramms bei stark unterschiedlichen Geschwindigkeitsvorgaben. Lediglich zwei Positionswerte müssen mit den zugehörigen Bewegungswerten (Geschwindigkeit oder Beschleunigung) programmiert werden. Die Steuerung ermittelt selbständig die zwischen den beiden Positionswerten liegende Strecke und leitet daraus einen kontinuierlichen Verlauf der Antriebssollwerte in Abhängigkeit von der Änderung der zwei hinterlegten Teileprogrammkenngrößen ab. Eine Bewegungsbahn mit sich monoton ändernden Vorschubwerten muß nicht anhand einzelner NC-Sätze vorgegeben werden, ausreichend ist lediglich eine Programmierung der Anfangs- und Endvorschubwerte als Teileprogrammkenngrößen.

In einer zweckmäßigen Weiterbildung werden die zumindest zwei Teileprogrammpositionen, denen jeweils Anfangs- und Endteileprogrammbewegungswerte zugeordnet sind, in bestimmter Weise gekennzeichnet, um die Steuerung zur Ermittlung der Strecke zwischen eben diesen zwei Teileprogrammpositionen zu veranlassen. Der Benutzer kann in einfacher Weise zwischen der herkömmlichen Vorgabe eines Antriebssollwerts oder der erfindungsgemäßen wechseln, je nach der gewünschten Bearbeitungsart.

_Eine weitere vorteilhafte Ausgestaltung sieht vor, die Antriebssollwerte linear bezüglich der Geschwindigkeit zwischen den Teileprogrammkenngrößen zu interpolieren.

Weitere zweckmäßige Weiterbildungen ergeben sich aus weiteren abhängigen Ansprüchen und aus der Beschreibung.

Zeichnung

Ein Ausführungsbeispiel ist in der Zeichnung dargestellt und in der nachfolgenden Beschreibung näher erläutert. Es zeigen die Figur 1 ein Blockschaltbild, die Figuren 2, 3a, 3b, 5 typische Sollwertverläufe, die Figur 4 ein Teileprogramm sowie die Figur 6 ein Flußdiagramm der erfindungsgemäßen Vorrichtung und des erfindungsgemäßen Verfahrens.

Beschreibung des Ausführungsbeispiels

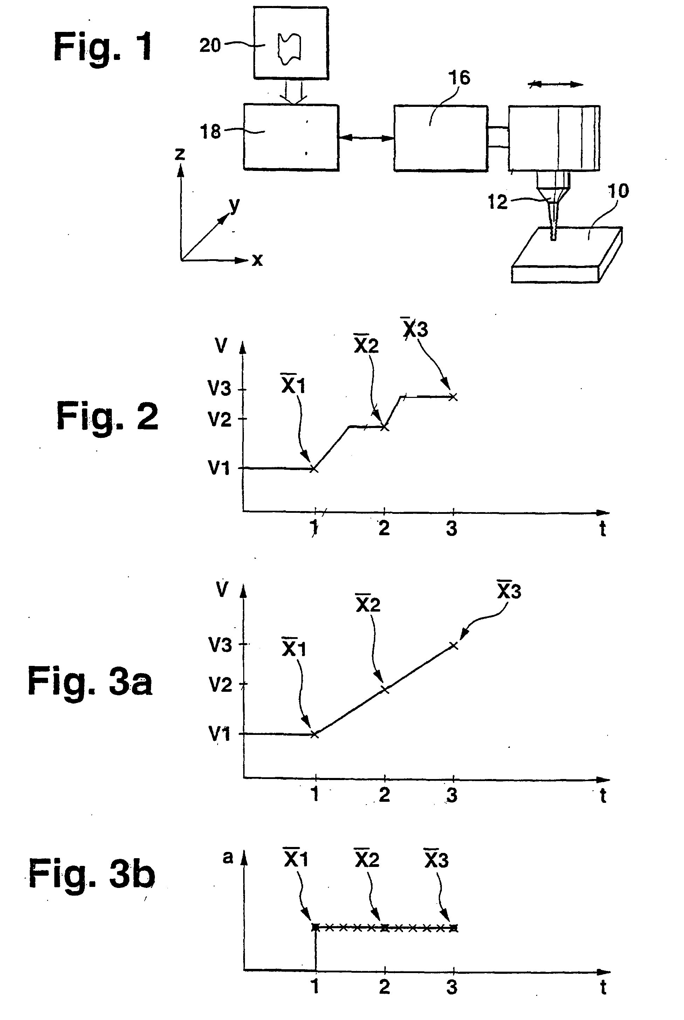

Ein Werkstück 10 wird von einem Werkzeug 12 bearbeitet, welches von einem Antrieb 16 zumindest in x-Richtung bewegt wird. Der Antrieb 16 erhält Sollwerte von einer Steuerung 18, die Daten eines Teileprogramms 20 entsprechend aufbereitet. Figur 2 zeigt einen typischen rampenförmigen Vorschubverlauf V nach dem Stand der Technik.

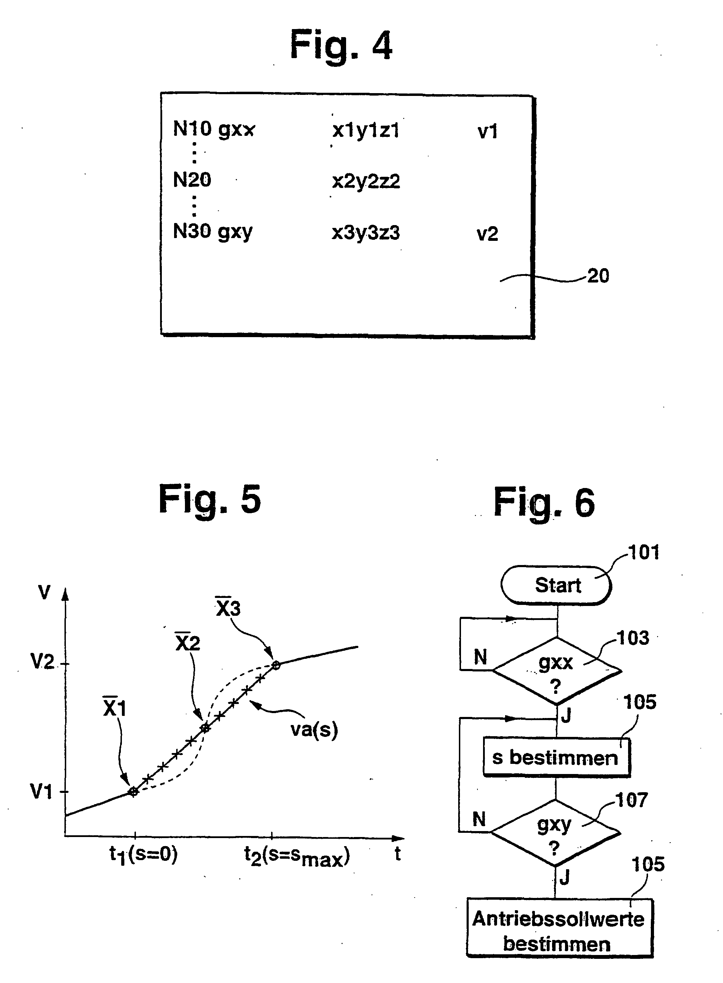

In den Figuren 3a, 3b ist ein Vorschub- beziehungsweise Beschleunigungsverlauf dargestellt, wie er sich bei der erfindungsgemäßen Vorrichtung und dem erfindungsgemäßen Verfahren ergibt. In dem Teileprogramm 20 gemäß Figur 4 sind exemplarisch drei NC-Datensätze gezeigt. Ein als Gxx bezeichneter Startbefehl legt für die Steuerung 18 fest, daß mit der erfindungsgemäßen Sollwertvorgabe begonnen werden soll. In diesem ersten NC-Satz sind darüber hinaus erste Teileprogrammpositionen X1, Y1, Z1 mit zugehöriger ersten Teileprogrammkenngröße V1 hinterlegt. Als Teileprogrammkenngröße wird in dem Ausführungsbeispiel der programmierte Vorschub V1 verwendet, nachfolgend als Teileprogrammvorschub bezeichnet. Im zweiten Datensatz wird eine zweite Teileprogrammposition X2, Y2, Z2 angegeben, die angefahren werden soll. Dem dritten NC-Datensatz ist ein Endebefehl Gxy vorangestellt neben einer dritten Teileprogrammposition X3, Y3, Z3 mit zweiter Teileprogrammkenngröße V2, nachfolgend als zweiter Teileprogrammvorschub V2 bezeichnet. Das zugehörige Bewegungsdiagramm zeigt Figur 5. Die auf der Geraden liegenden Kreuze stellen die von der Steuerung 18 ermittelten streckenabhängigen Antriebssollwerte VA(S) dar. Hierbei handelt es sich um erfindungsgemäß ermittelte Geschwindigkeits- bzw. Beschleunigungswerte, die eventuell durch Integration dem Antrieb 16 als Lagesollwerte zur Verfügung gestellt werden können.

Bei einer herkömmlichen Antriebssollwertvorgabe ergibt sich ein Vorschubverlauf wie in Figur 2 dargestellt. In dem Teileprogramm 20 ist nach herkömmlicher Weise jeder Teileprogrammposition X1, X2, X3 der jeweilige Teileprogrammvorschub V1, V2, V3 zugeordnet. In der ersten Teileprogrammposition gibt die herkömmliche Steuerung eine Maximalbeschleunigung als Sollwert an den Antrieb 16, um bis spätestens in der zweiten Teileprogrammposition X2 den programmierten Teileprogrammvorschub V2 zu erreichen. Dieser zweite Teileprogrammvorschub V2 wird in der Regel schon deutlich vor der zweiten Teileprogrammposition X2 erreicht, so daß sich der gezeigte rampenförmige Verlauf einstellt, der zu dem dargestellten Geschwindigkeitsverlauf führt.

Der erfindungsgemäßen Vorrichtung und dem erfindungsgemäßen Verfahren hingegen werden kontinuierliche Bewegungsverläufe gezielt erreicht, wie in den Figuren 3a, 3b dargestellt. Das Zustandekommen dieses Bewegungsverlaufs wird anhand des Ausführungsbeispiels gemäß den Figuren 4 und 5 erläutert. Der Anfang eines Abschnitts in einem Teileprogramm 20, der sich durch stark schwankende Vorschubverläufe auszeichnet, wird mit dem Startbefehl Gxx markiert. Die erste Teileprogrammposition X1, Y1, Z1 wird mit dem ersten Teileprogrammvorschub V1 erreicht. Falls in dem Datensatz kein erster Teileprogrammvorschub V1 programmiert wurde, greift die Steuerung 18 auf den letzten Teileprogrammvorschub im NC-Programm zurück. Durch den Startbefehl Gxx wird die erfindungsgemäße Sollwertvorgabe angestoßen. Erkennt die Steuerung 18 den Startbefehl Gxx, Schritt 103, ermittelt sie durch Integration die Strecke S, die ausgehend von der durch den Startbefehl Gxx markierten ersten Teileprogrammposition X1 über die weitere Teileprogrammposition X2 bis hin zu der durch den Endebefehl Gxy markierten dritten Teileprogrammposition X3 durchlaufen wird. Die Steuerung 18 errechnet zunächst die Strecke S zur zweiten Teileprogrammposition X2, an die sich noch weitere Zwischenpositionen anschließen können. Es wird so lange die Strecke S zur nächsten anzufahrenden Zwischenposition X bestimmt, Schritt 105, bis der Endebefehl Gxy erkannt wird, Schritt 107. Die sich bei durch den Endebefehl Gxy gekennzeichneten dritten Teileprogrammposition X3 ergebende Streckenlänge wird als Maximalstrecke Smax für die weitere Bestimmung der Antriebssollwerte VA abgespeichert, Schritt 109. In diesem dritten NC-Satz ist der zu erreichende zweite Teileprogrammvorschub V2 hinterlegt. Die Steuerung 18 erkennt, daß eine Erhöhung des Vorschubs von V1 auf V2 innerhalb der ermittelten Strecke Smax zu erreichen ist.

Die Vorgabe der Antriebssollwerte VA (S), im Ausführungsbeispiel die Antriebssollgeschwindigkeit, erfolgt in Abhängigkeit von der Strecke S. Gemäß Figur 5 ist eine lineare Vorschubanhebung vorgesehen. Die Antriebssollwerte lassen sich durch eine bekannte Geradengleichung der Form

$$VA(S) = (V2 - V1) * (S : Smax) + V1$$

beschreiben. Damit könnte sich beispielsweise der in Figur 5 gezeigte, durch Kreuze markierte Antriebssollwertverlauf VA ergeben, wenn die Antriebssollwerte VA (S) diskret mit gleichem Streckenabstand $\Delta S$ vorgegeben werden. Die Antriebssollwerte VA zeichnen sich damit durch einen gleichförmigen Verlauf aus, so daß sich eine Bewegungsbahn entsprechend der Figuren 3a, 3b ergibt.

In der Anwendungsweise sind zahlreiche Abwandlungen denkbar. Anstelle eines linearen Geschwindigkeitsübergangs wie vorher beschrieben, könnten die Antriebssollwerte VA prinzipiell durch beliebige mathematische Funktionen beschrieben werden. Eine in Figur 5 strichliniert dargestellte Funktion gewährleistet einen glatten Übergang zwischen den beiden Vorschubwerten V1, V2, ohne 'daß Knickpunkte im Beschleunigungsverlauf auftreten.

Die erfindungsgemäße Berechnung der Antriebssollwertvorgabe könnte auch eingesetzt werden, wenn anstelle der Vorschubwerte V1, V2 entsprechende Beschleunigungsänderungen ruckfrei zu durchlaufen sind.

**Patentansprüche**

1. Vorrichtung zur Erzeugung eines Sollwerts für die Ansteuerung zumindest eines Antriebs (16), insbesondere für eine Werkzeugmaschine, wobei'in einem Teileprogramm (20) zur Beschreibung einer Bewegungsbahn eines von dem zumindest einen Antrieb (18) bewegbaren Werkzeugs (12) zumindest zwei Teileprogrammpositionen (X1, Y1, Z1; X2, Y2, Z2; X3, Y3, Z3) hinterlegt sind, mit einer Steuerung (18), die aus dem Teileprogramm (20) zumindest einen Antriebssollwert (VA(S)) zur Ansteuerung des Antriebs (18) ermittelt, dadurch gekennezichnet, dass die zumindest eine Teileprogrammposition (X1, Y1, Z1) durch einen Start-Befehl (Gxx) und die weitere Teileprogrammposition (X3, Y3, Z3) durch einen Ende-Befehl (Gxy) gekennzeichnet ist, wobei Mittel (18) vorgesehen sind zur Ermittlung einer Strecke (S), die zwischen den durch Start- und Endebefehl (Gxx, Gxy) markierten zwei Teileprogrammpositionen (X1, Y1, Z1; X3, Y3, Z3) liegt, und zum Erzeugen eines Antriebssollwerts (VA(S)) in Abhängigkeit von der Strecke (S) und von zumindest einer Teileprogrammkenngröße (V1, V2).

2. Vorrichtung nach Anspruch 2, **dadurch gekennzeichnet, daß** die zumindest zwei Teileprogrammpositionen (X1, Y1, Z1; X3, Y3, Z3) durch einen Befehl (Gxx, Gxy) gekennzeichnet werden zur Ermittlung des Antriebssollwerts (VA(S)).

3. Vorrichtung nach einem der vorhergehenden Ansprüche, **dadurch gekennzeichnet, daß** der Antriebssollwert (VA(S)) sich zumindest linear in Abhängigkeit der Zeit ändert.

4. Vorrichtung nach einem der vorhergehenden Ansprüche, **dadurch gekennzeichnet, daß** als Antriebssollwert (VA(S)) ein Geschwindigkeits- oder Beschleunigungswert verwendet wird.

5. Vorrichtung nach einem der vorhergehenden Ansprüche, **dadurch gekennzeichnet, daß** dem Antrieb (16) eine durch Integration des Antriebssollwerts (VA(S)) gebildete Größe als Sollwert zugeführt ist.

6. Vorrichtung nach einem der vorhergehenden Ansprüche, **dadurch gekennzeichnet, daß** als Teileprogrammkenngröße (V1, V2) der programmierte Vorschub verwendet ist.

7. Verfahren zur Erzeugung eines Sollwerts für die Ansteuerung zumindest eines Antriebs (18), insbesondere für eine Werkzeugmaschine, wobei in einem Teileprogramm (20) zur Beschreibung einer Bewegungsbahn eines von dem zumindest einen Antrieb (16) bewegbaren Werkzeugs (12) zumindest zwei Teileprogrammpositionen (X1, Y1, Z1; X2, Y2, Z2; X3, Y3, Z3) hinterlegt sind, wobei eine Steuerung (18) aus dem Teileprogramm (20) zumindest einen Antriebssollwert (VA(S)) zur Ansteuerung des Antriebs (18) ermittelt, **gekenn-**

**zeichnet durch** folgende Schritte:

- Ermitteln der Strecke, die zwischen zwei **durch** einen Start- und einen Endebefehl (Gxx, Gxy) markierten Teileprogrammpositionen (X1, Y1, Z1; X2, Y2, Z2; X3, Y3, Z3) liegt,
- Erzeugen des Antriebssollwerts (VA(S)) in Abhängigkeit von der Strecke und von zumindest einer Teileprogrammkenngröße (V1, V1).

**Claims**

1. A device for generating a setpoint value for the control of at least one drive (16), in particular for a machine tool, wherein at least two part program positions (X1, Y1, Z1; X2, Y2, Z2; X3, Y3, Z3) are stored in a part program (20) for describing a trajectory of a tool (12) that can be moved by the at least one drive (16), with a control unit (18) which determines at least one drive setpoint value (VA(S)) from the part program (20) to control the drive (16), wherein the at least one part program position (X1, Y1, Z1) is identified by a start command (Gxx) and the other part program position (X3, Y3, Z3) is identified by an end command (Gxy), means (18) being provided to determine a distance (S) which lies between the two part program positions (X1, Y1, Z1; X3, Y3, Z3) identified by the start and end command (Gxx, Gxy), and to generate a drive setpoint value (VA(S)) according to the distance (S) and at least one part program parameter (V1, V2).

2. A device as claimed in claim 1, wherein the at least two part program positions (X1, Y1, Z1; X3, Y3, Z3) are identified by a command (Gxx, Gxy) to determine the drive setpoint value (VA(S)).

3. A device as claimed in one of the preceding claims, wherein the drive setpoint value (VA(S)) changes with time in an at least linear relation.

4. A device as claimed in one of the preceding claims, wherein a velocity or acceleration value is used as the drive setpoint value (VA(S)).

5. A device as claimed in one of the preceding claims, wherein a quantity formed by integration of the drive setpoint value (VA(S)) is supplied to the drive (16) as the setpoint value.

6. A device as claimed in one of the preceding claims, wherein the programmed feed rate is used as the part program parameter (V1, V2).

7. A process for generating a setpoint value for the control of at least one drive (16), in particular for a machine tool, wherein at least two part program po-

**EP 1 212 664 B1**

sitions (X1, Y1, Z1; X2, Y2, Z2; X3, Y3, Z3) are stored in a part program (20) for describing a trajectory of a tool (12) that can be moved by at least one drive (16), wherein a control unit (18) determines at least one drive setpoint value (VA(S)) from the part program (20) to control the drive (16), wherein there are the following steps:

- determining the distance which lies between two part program positions (X1, Y1, Z1; X2, Y2, Z2; X3, Y3, Z3) identified by a start command and an end command (Gxx, Gxy),
- generating the drive setpoint value (VA(S)) according to the distance and at least one part program parameter (V1, V2).

## Revendications

1. Dispositif destiné à produire une valeur de consigne pour la commande d'au moins un système d'entraînement (16) en particulier pour une machine-outil, au cours duquel sont intégrées au moins deux positions de programme d'usinage (20) (X1, Y1, Z1 ; X2, Y2, Z2 ; X3, Y3, Z3) pour la description du mécanisme de mouvement d'un outil (12) déplaçable par au moins un système d'entraînement (16), dans laquelle une commande (18) détermine depuis le programme d'usinage (20) au moins une valeur de consigne du système d'entraînement (VA (S)) pour commander le système d'entraînement (18), ayant la particularité d'avoir au moins une position de programme d'usinage (X1, Y1, Z1) **caractérisée par** un commande de lancement (Gxx) et une autre position de programme d'usinage (X3, Y3, Z3) **caractérisée par** un commande de fin (Gxy), dans lequel des éléments spécifiques (18) sont prévus pour déterminer un segment (S) situé entre deux positions de programme d'usinage (X1, Y1, Z1 ; X3, Y3, Z3), et pour produire une valeur de consigne du système d'entraînement (VA (S)) par rapport au segment (S) et à au moins une caractéristique de programme d'usinage (V1, V2).

2. Dispositif basé sur la revendication 2, ayant la particularité d'avoir au moins deux positions de programme d'usinage (X1, Y1, Z1 ; X3, Y3 et Z3) **caractérisées par** un ordre (Gxx, Gxy) pour déterminer la valeur de consigne du système d'entraînement (VA (S)).

3. Dispositif basé sur l'une des revendications précédentes, ayant la particularité d'avoir une valeur de consigne du système d'entraînement (VA (S)) qui évolue de manière linéaire au cours du temps.

4. Dispositif basé sur l'une des revendications précédentes, ayant la particularité d'avoir une valeur de vitesse ou d'accélération utilisée comme valeur de consigne du système d'entraînement (VA (S)).

5. Dispositif basé sur l'une des revendications précédentes, ayant la particularité d'avoir une taille formée par intégration de la valeur de consigne du système d'entraînement (VA (S)) déversée/alimentée au système d'entraînement comme valeur de consigne.

6. Dispositif basé sur l'une des revendications précédentes, ayant la particularité d'avoir une avance programmée utilisée comme caractéristique de programme d'usinage (V1, V2).

7. Procédure destinée à produire une valeur de consigne pour la commande d'au moins un système d'entraînement (18) en particulier pour une machine-outil, au cours de laquelle sont intégrées au moins deux positions de programme d'usinage (20) (X1, Y1, Z1 ; X2, Y2, Z2 ; X3, Y3, Z3) pour la description du mécanisme de mouvement d'un outil (12) déplaçable par au moins un système d'entraînement (16), dans laquelle une commande (18) détermine à partir du programme d'usinage (20) au moins une valeur de consigne du système d'entraînement (VA (S)) pour commander le système d'entraînement (18), **caractérisée par** les étapes suivantes :

- Détermination du segment situé entre deux positions de programme d'usinage (X1, Y1, Z1 ; X2, Y2, Z2; X3, Y3, Z3) signalées par une commande de lancement et de fin (Gxx, Gxy)
- Production d'une valeur de consigne du système d'entraînement (VA (S)) relative au segment et à la caractéristique de programme d'usinage (V1, V1).

**Fig. 1**

20

18

16

12    10

z

y

x

**Fig. 2**

$\overline{X}2$

$\overline{X}3$

V

$\overline{X}1$

V3

V2

V1

1    2    3    t

**Fig. 3a**

V

$\overline{X}2$    $\overline{X}3$

$\overline{X}1$

V3

V2

V1

1    2    3    t

**Fig. 3b**

a

$\overline{X}1$    $\overline{X}2$    $\overline{X}3$

1    2    3    t

# Fig. 4

| | | |
|---|---|---|
| N10 gxx | x1y1z1 | v1 |
| N20 | x2y2z2 | |
| N30 gxy | x3y3z3 | v2 |

20

# Fig. 5

# Fig. 6

7